Europäisches Patentamt

European Patent Office

Office européen des brevets

(11) Publication number: **0 267 573**
**A2**

# EUROPEAN PATENT APPLICATION

(21) Application number: 87116565.0

(22) Date of filing: 10.11.87

(51) Int. Cl.4: **G06K 19/00**

(30) Priority: **10.11.86 IT 2362386 U**

(43) Date of publication of application:
**18.05.88 Bulletin 88/20**

(84) Designated Contracting States:
**DE ES FR GB**

(71) Applicant: **Ferrarini, Giorgio**
**Via Trivulziana 34**
**I-20097 S. Donato Milanese (MI)(IT)**

Applicant: **Molinari, Galeno**
**P.za Marianna B. Bulgarelli, 42**
**I-00139 Roma(IT)**

(72) Inventor: **Ferrarini, Giorgio**
**Via Trivulziana 34**
**I-20097 S. Donato Milanese (MI)(IT)**
Inventor: **Molinari, Galeno**
**P.za Marianna B. Bulgarelli, 42**
**I-00139 Roma(IT)**

(74) Representative: **Dr. Ing. A. Racheli & C.**
**Viale San Michele del Carso, 4**
**I-20144 Milano(IT)**

(54) A flexible, envelope- or pocket-shaped cover to contain and standardize "unprocessable" documents for automated processing, particularly in the banking sector.

(57) An envelope-shaped cover for document standardization, particularly in the banking sector, is flexible and consists of a front element (12), a back element (14) of a lesser height than the front element and a closing flap (20) integral with the front element. The front and back elements are joined along at least one major side and part of a minor side, forming an opaque, bonded band utilizable for machine-readable marking. One element may have a window (22). An area with removable type adhesive may be provided to fix the document in a detachable manner.

FIG.1

## "A FLEXIBLE, ENVELOPE-OR POCKET-SHAPED COVER TO CONTAIN AND STANDARDIZE "UNPROCESSABLE" DOCUMENTS FOR AUTOMATED PROCESSING, PARTICULARLY IN THE BANKING SECTOR"

In the banking sector there is known to be a circulation of documents such as cheques, banker's drafts, bills, drafts, vouchers, etc. that are subjected to a whole series of treatments, using special machines, to perform such operations as marking with optical or magnetic characters, sorting, stamping, microfilming, photocopying, etc.

In many cases the original documents prove to be "unprocessable", i.e. not fit to undergo the above described series of treatments, in that they do not possess all the necessary characteristics for the various mechanized processing operations.

Among the factors that make documents "unprocessable" we can list unsuitable size, paper substance lower than is required or chemical composition of the paper not suitable for machines, wear or presence of creases or tears due to handling of the document before its arrival at the automatic processing centre, presence of optical or magnetic marking not valid for the centre that is to carry out processing, marking no longer legible or in a position that cannot be used in the cycle to which the document must be subjected, lack of the necessary space for the required marks or stamps, etc.

The problem therefore arises of overcoming the difficulty of the "unprocessible" document by acting on the document itself in order to restore all the particular characteristics that make it possible to automatically perform all the operations of marking, sorting, stamping, microfilming, photocopying etc. This operation, intended to give to the document all the characteristics required for automatic processing, is called "standardization", i.e. bringing the document within certain "standards". In fact, the term "standardization" is thus given a wider meaning than it should really have, in that this type of operation also comprises restoration of characteristics that are not included in the list of those envisaged by the current standards, and therefore would not fall within the etymological meaning of the word.

The object of this invention is to provide a means for permitting standardization of documents.

According to this invention, the standardization operation is carried out by inserting the "unprocessable" document in a flexible envelope- or pocket-shaped cover.

The subject of the invention consists of a flexible envelope-or pocket-shaped cover, comprising a front element and a back element made fast along a major side and possibly at least part of a minor side by means of bonded areas, forming one or more bands for optical or magnetic marking. The cover is preferably transparent and includes an upper flap that partly overlaps the back element, in order to close the envelope. A window can preferably be made in the back element to make the document inside the cover accessible for purposes of stamping etc. According to other characteristics, an area of the cover is provided with adhesive of the type known as "removable type glue" or "pressure-sensitive adhesive" to allow the document to be fixed while nevertheless leaving the possibility of extracting the document as desired. In one embodiment the cover is open along a minor side, on which it may have an opening in both elements to facilitate removal of the document.

The present invention, once the document is inserted, permits automatic processing to be performed by machines on all those documents which would otherwise pose serious difficulties for automated handling, with all the resulting consequences of higher costs and lengthy procedures, without affecting, modifying or impairing any of the original characteristics of the documents, so that the integrity of the documents is maintained for all purposes, legal or other, for which the document was originally issued.

The flexible envelope-or pocket-shaped cover is structurally simple and easy to use; it makes it possible, if necessary, to fasten the document inside it in a permanent or detachable manner, without using staples, thread or other foreign bodies, and it also makes it possible, if necessary, to extract and reinsert the document easily and rapidly.

A more detailed description follows, with reference to the accompanying drawings, in which:

Fig. 1 is a perspective view of first exemplary embodiment of the cover;

Fig. 2 is a front view of the embodiment in fig. 1;

fig. 3 is a section along 3-3;

Fig. 4 is a perspective view of a second exemplary embodiment;

Fig. 5 is a front view of the cover in fig. 4;

Fig. 6 is a section along 6-6 in fig. 5;

Fig. 7 is a perspective view of a third type of cover;

Fig. 8 is a perspective view of a fourth type of cover;

Fig. 9 is a perspective view of a fifth type of cover;

Fig. 10 is a perspective view of a sixth type of cover.

As shown in the figures, a flexible cover 10 according to this invention is shaped like a rectangular envelope or pocket, which preferably is rectangularly shaped and horizontally extending, and can be made from both paper and synthetic or other types of material, preferably transparent at least in part. The cover 10 comprises a front element 12 and a back or rear element 14 of a lesser height than the front one, joined on at least two sides. In particular the two elements are joined permanently along the bottom major side, so as to create an opaque, generally coloured band 16, and along at least on short vertical side, so as to form a second vertical band 18, generally coloured.

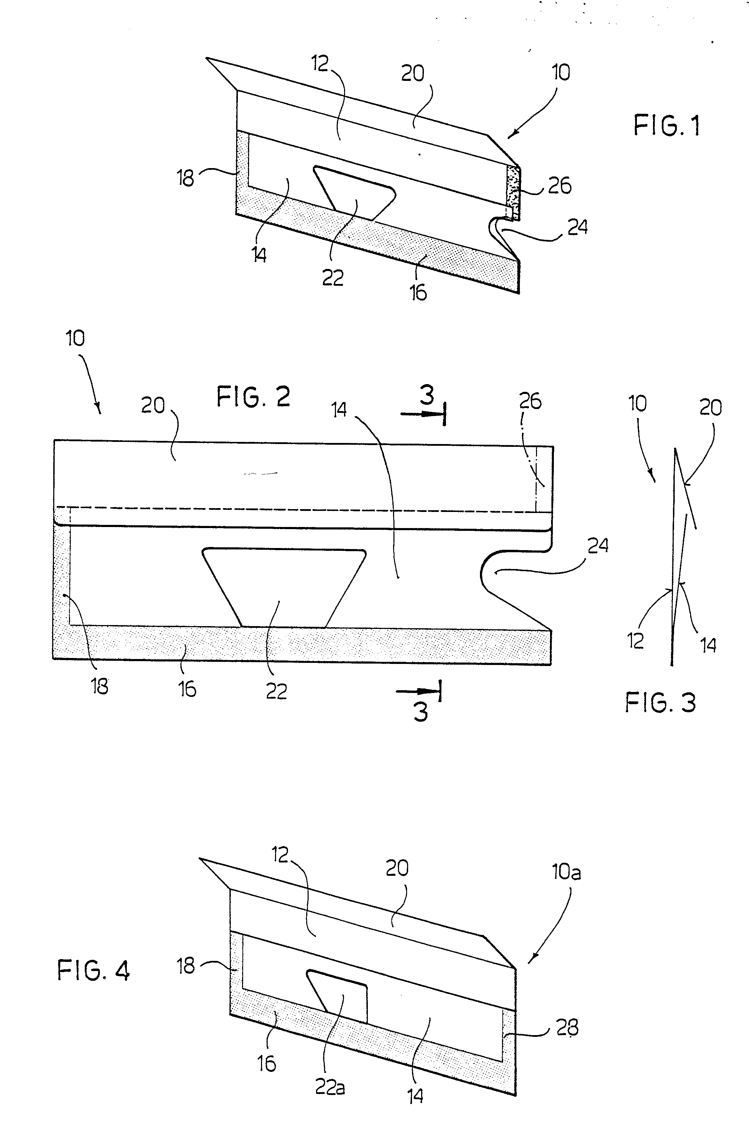

A flap 20 extends from the top of the sheet 12 forming the front element, said flap 20 having such a height as to permit, when it is folded, partial overlapping on the back element 14. The flap 20 is used to close the envelope or pocket and therefore it or the back element has areas provided with adhesive. A window 22 of various shapes can be made in the element 14 forming the back part of the cover, in the position where it is of most use for the process for which the cover is to be used. In the case of a cover open on one of the two short sides, for example on the right in Fig. 2, a shaped opening 24 can be made on the same side, making it easier to grip the document for removal. Likewise in the case of a cover open on one of the short sides, an area 26 can be envisaged, located approximately but not necessarily as shown in figs. 1 and 2, provided with adhesive of the removable or so-called pressure-sensitive type (adhesive permitting repeated sticking and unsticking) which allows the document to be secured, while nevertheless leaving the possibility of extracting it whenever necessary.

The opaque horizontal band 16, which may be coloured, is intended to receive marking, carried out with special machines, in optical or magnetic characters, while the vertical part 18, which is narrower than the band 16 and is generally opaque and coloured, is designed to form a spacing element between frames for sequential microfilming of documents.

In the example of a cover 10a illustrated in figs. 4, 5 and 6 the parts that are identical to the corresponding parts of cover 10 are not described and are designated by the same numbers as in cover 10. The cover 10a has a trapezoidal-shaped opening 22a, different from opening 22, and an additional vertical band 28, on the opposite side to vertical band 18 and extending for the height of the back element 14. It should be noted that one or the other of the bands 18 and 28 can be partly bonded in order to permit easy opening of the corresponding side so as to allow removal and/or reinsertion of the document.

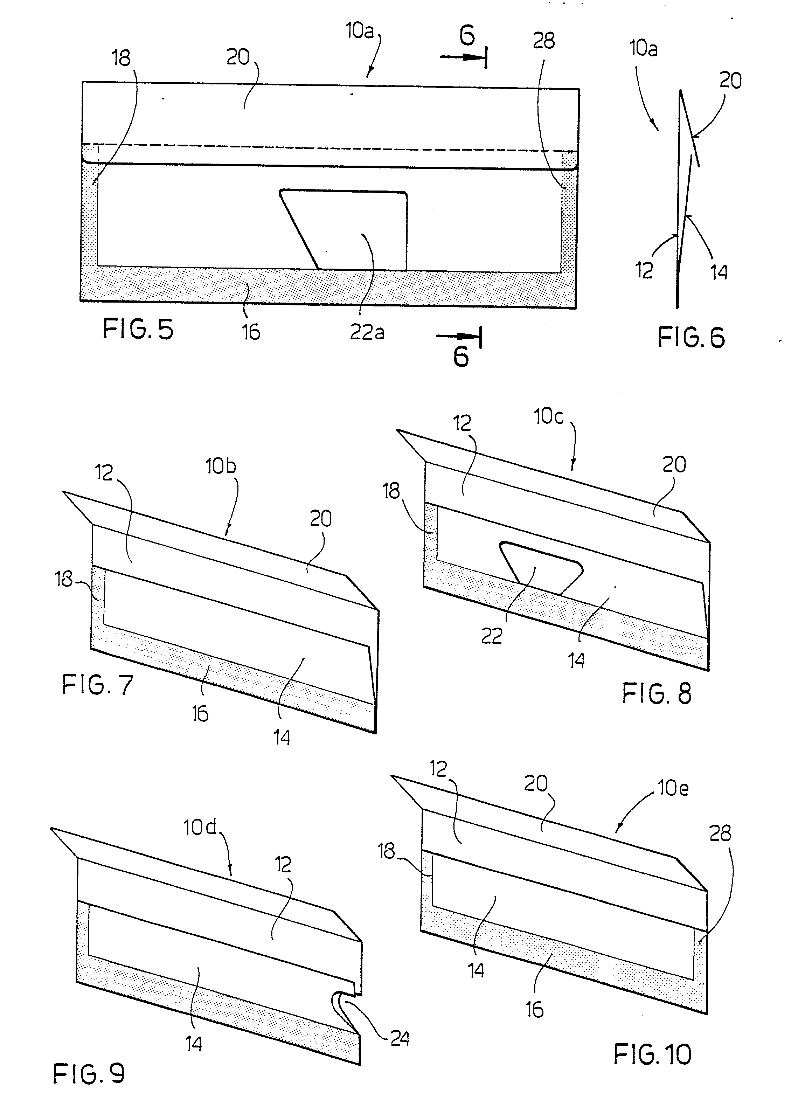

Fig. 7 illustrates a variant 10b of the cover, in which the cover is without opening 22, opening 24 and adhesive area 26; the other parts bear the same reference numbers as in the other exemplary embodiments.

The modified embodiment in fig. 8 illustrates a cover 10c with opening 22 but without opening 24.

The modified embodiment in fig. 9 illustrates a cover 10d with opening 24 only.

The modified embodiment in fig. 10 illustrates a cover 10e with three bonded bands and without openings 22 and 24.

## Claims

1. An envelope cover for containing documents that are to be subjected to automatic processing, characterized in that: it is of flexible, at least partly transparent material and comprises a front element (12) and a back element (14) joined together by adhesion along a band (16) extending along one of their major sides and a band (18) extending along at least part of a minor side, said band extending along the major side being at least in part for optical or magnetic marking.

2. A cover according to claim 1, characterized in that the front element (12) is of a greater height than the back element (14) and that integral with the front element there is a folding flap (20) extending far enough to cover a part of the back element.

3. A cover according to claim 1, characterized in that it comprises, in one of said elements, a window (22) to make the document inside accessible.

4. A cover according to claim 1, characterized in that it is open along one of its minor sides.

5. A cover according to claim 1, characterized in that it is open along one of its minor sides and has, on said side, corresponding openings (24) in the front and back elements, for easy removal of the document.

6. A cover according to claim 1, characterized in that it has an area (26) with removable adhesive to fix the document in a detachable manner.

7. A cover according to claim 6, characterized in that the area (26) with removable adhesive is near the opening on the minor side.

8. A cover according to claim 1, characterized in that on at least one minor side a partially bonded area is provided to permit extraction or reinsertion of the document.

9. A cover according to claim 1, characterized in that said band (16) extending along the major side is opaque.

0 267 573

10. A cover according to claim 1, characterized in that said band (18) extending along the minor side is coloured and serves to provide a spacing element between the frames for sequential micro-filming.

FIG.1

12  20  10

18

26

14  22  16

24

10

FIG. 2

20  14  3  26

24

18  16  22

3

10  20

FIG. 3

12  14

FIG. 4

12  20  10a

18

28

16  22a  14

FIG. 5

FIG. 6

FIG. 7

FIG. 8

FIG. 9

FIG. 10